# EUROPÄISCHE PATENTSCHRIFT

(11) **EP 1 394 373 B1**
(45) Veröffentlichungstag und Bekanntmachung des Hinweises auf die Patenterteilung: **02.03.2005**
(21) Anmeldenummer: 02018981.7
(22) Anmeldetag: 27.08.2002
(51) Int. Cl.: F01N 3/023, F01N 3/035, F01N 3/08

(54) **Verfahren zum Aufheizen eines Russfilters bei einem Abgasanlagensystem eines Verbrennungsmotors-insbesondere eines Dieselmotors-mit wenigstens einem Katalysator und einem diesem in Strömungsrichtung nachgeordneten Russfilter zum Speichern des Russes**
Method for heating a soot filter in an exhaust system of an internal combustion engine - in particular a diesel engine - comprising at least a catalyst and a soot filter located downstream to gather soot
Procédé de chauffage d'un filtre à suie dans un système de gaz d'échappement d'un moteur à combustion interne - notamment d'un moteur diesel- avec au moins un catalyseur suivi d'un filtre à suies

(43) Veröffentlichungstag der Anmeldung: 03.03.2004
(73) Patentinhaber: AUDI AG, 85045 Ingolstadt (DE)
(72) Erfinder: Odendall, Bodo, 86633 Neuburg (DE)

(56) Entgegenhaltungen:
- WO-A-01/04466
- DE-A- 10 033 159
- FR-A- 2 774 422
- FR-A- 2 774 427
- US-A- 5 207 990
- US-A1- 2002 053 202
- PATENT ABSTRACTS OF JAPAN vol. 1996, no. 06, 28. Juni 1996 (1996-06-28) & JP 08 042326 A (HINO MOTORS LTD), 13. Februar 1996 (1996-02-13)

## Beschreibung

Die Erfindung betrifft ein Verfahren zum Aufheizen eines Rußfilters bei einem Abgasanlagensystem eines Verbrennungsmotors, insbesondere eines Dieselmotors mit mehreren in Abgasströmungsrichtung hintereinander angeordneten Katalysatoren und mit einem diesen in Strömungsrichtung nachgeordneten Rußfilter zum Speichern des Rußes, wobei der dem Rußfilter vorgeordnete Katalysator soweit aufgeheizt wird, dass die aus dem Katalysator in den Rußfilter eingeleitete Wärme den Rußfilter soweit aufheizt, dass die Verbrennung des Rußes eingeleitet wird.

Bei Dieselmotoren ist es bekannt, in der Abgasanlage Rußfilter einzusetzen. Um die Funktionsfähigkeit des Rußfilters zu gewährleisten, ist es erforderlich, den Rußfilter von Zeit zu Zeit auszutauschen oder zu regenerieren. Zur Regeneration ist es bekannt, den im Rußfilter angesammelten Ruß zu verbrennen. Da die hierfür im Rußfilter erforderliche Temperatur bei einem Dieselmotor - wenn überhaupt - nur sehr aufwendig vom Motor in den Rußfilter eingeleitet werden kann, ist es beispielsweise aus der DE 196 18 397 A1 bekannt, den angesammelten Ruß mit zusätzlichem Brennstoff zu befeuchten und somit die zum Verbrennen erforderliche Temperatur herabzusetzen. Dies ist nicht nur mit zusätzlichem Aufwand für die Brennstoffzufuhr, sondern auch mit zusätzlichen Maßnahmen gegen ungewünschte Zündung im Rußfilterbereich verbunden.

Aus der Druckschrift DE 100 33 159 A1 ist eine Brennkraftmaschine mit einem regenerierbaren Partikelfilter im Abgasstrang bekannt. Zur Verbesserung der Regeneration weist dieser Partikelfilter einen stromauf angeordneten Oxidationskatalysator auf und wird bei Bedarf stromauf des Oxidationskatalysators Kraftstoff in den Abgasstrang eingespritzt. Dadurch findet im Oxidationskatalysator eine exotherme Reaktion statt, wird die Abgastemperatur erhöht und wird die Regeneration des Partikelfilters eingeleitet.

In der Druckschrift WO 01/04466 A1 ist eine Vorrichtung und ein Verfahren zum Entfernen von Rußpartikeln aus den Verbrennungsabgasen geoffenbart. Dabei ist dem Rußfilter ein NOₓ-Katalysator vorgeschaltet, welcher aufgrund seiner unmittelbar benachbarten Anordnung zu dem Rußfilter zu einer verbesserten Aufheizung des Rußfilters sowie zu einer thermischen Isolation des Rußfilters führt.

Darüber hinaus zeigen die Druckschriften FR 2 774 427 A und FR 2 774 422 A einen Oxidationskatalysator und einen Rußfilter, wobei diese beiden Elemente in einem gemeinsamen Gehäuse integriert sind, um die Wärmeverluste zu reduzieren.

Zudem ist in der Druckschrift US 5,207,990 A ein Abgasreinigungssystem beschrieben, bei welchem stromauf eines Abgaskatalysators Kraftstoff eingespritzt wird, wodurch im Abgaskatalysator eine exotherme Reaktion ausgelöst wird, die Abgastemperatur angehoben wird und der stromab liegende Rußfilter regeneriert wird.

Schließlich ist auch aus der Druckschrift JP 08 042326 A eine Abgasemissionsregelungseinrichtung bekannt, welche ein gemeinsames Gehäuse für einen Oxidationskatalysator und einen Partikelfilter aufweist.

Der Erfindung liegt die Aufgabe zugrunde, mit geringem Aufwand einen Rußfilter bei einem Abgasanlagensystem eines Verbrennungsmotors zur Einleitung der Verbrennung des Rußes aufzuheizen.

Erfindungsgemäß wird die Aufgabe durch das Verfahren gemäß den Merkmalen des Anspruchs 1 gelöst, wonach der dem Rußfilter in Strömungsrichtung unmittelbar vorgeordnete Katalysator aufgeheizt wird, indem die exotherme Reaktion aus einem weiteren in Strömungsrichtung vorgeordneten Katalysator in den nachgeordneten Katalysator verlagert wird, wobei die Verlagerung der exothermen Reaktion durch eine λ-Regelung mit alternierendem Fett-Mager-Betriebszyklus des Verbrennungsmotors erfolgt, bei welcher der Fett-Betrieb mit λ < 1 jeweils länger aufrechterhalten wird als der im Sauerstoffspeicher des stromaufwärts angeordneten Katalysators gespeicherte Sauerstoff die Schadstoffe Kohlenwasserstoff und Kohlenmonoxid umsetzen kann, so dass die Umsetzung zumindest teilweise durch den im Sauerstoffspeicher des stromabwärts angeordneten Katalysators gespeicherten Sauerstoff erfolgt.
Durch eine solche Lambda-Regelung mit überwiegendem Fett-Betrieb wird erreicht, dass der Sauerstoffspeicher des stromauf angeordneten Katalysators aufgebracht wird und auch innerhalb des nachfolgenden Katalysators eine exotherme Reaktion stattfindet. Die bei der Verlagerung der exothermen Reaktion entstehende Wärmemenge wird also in baulicher Nähe zum Rußfilter und unabhängig von Anordnung und Ausbildung des Motors erzeugt. Daher ist das Verfahren einfach und zuverlässig, d.h. ohne zusätzliche Heizmittel und ohne zusätzliche Kraftstoffeintragung in den Rußfilter anwendbar. Durch das Verfahren können die Abgasemissionen gesteuert und auf niedrigem Niveau gehalten werden.

Zweckmäßig werden die Sauerstoffspeicher der beiden Katalysatoren im Mager-Betrieb mit λ > 1 wieder gefüllt.

Bevorzugt wird λ zum Aufheizen so geregelt, dass für λ im zyklischen Fett-Betrieb während des Aufheizens gilt: 0,95 ≥ λ ≥ 0,9. Hierdurch erfolgt durch den sehr fetten Betrieb in kurzer Zeit die Verlagerung der exothermen Reaktion in den stromabwärts angeordneten Katalysator, so dass die erforderliche Temperatur in kurzer Zeit erreicht wird.

Das Verfahren gemäß den Merkmalen von Anspruch 4 ermöglicht eine sehr empfindliche Regelung des Fett-Mager-Betriebszyklus' und somit sowohl die Aufheizung als auch die Abgaszusammensetzung. Bevorzugt sind die Verfahren gemäß den Merkmalen der Ansprüche 5 bzw. 6, durch die die Abgasgrenzwerte zuverlässig eingehalten werden und dennoch eine einfache und betriebssichere Temperaturerhöhung erzielt werden kann.

Das Verfahren gemäß den Merkmalen von Anspruch 7 ermöglicht es, den Rußfilter zur Einleitung der Rußverbrennung aufzuheizen, ohne den Oxidationskatalysator zu überhitzen.

Das Verfahren gemäß den Merkmalen von Anspruch 8 ermöglicht es, besonders vorteilhaft die Rußgeneration zu fördern durch NOₓ-Bildung.

Die Erfindung wird im Folgenden anhand der Figuren 1 bis 7 am Beispiel eines direkteinspritzenden Dieselmotors beispielhaft näher erläutert. Hierin zeigen:
- Figur 1: den schematischen Aufbau einer Abgasanlage eines direkteinspritzenden Dieselmotors;
- Figur 2a,b: zwei Diagramme zur Darstellung des Aufheizungsverhaltens der Abgasanlage von Figur 1 ohne die erfindungsgemäße Verlagerung der exothermen Reaktion in den stromabwärts angeordneten Katalysator, wobei

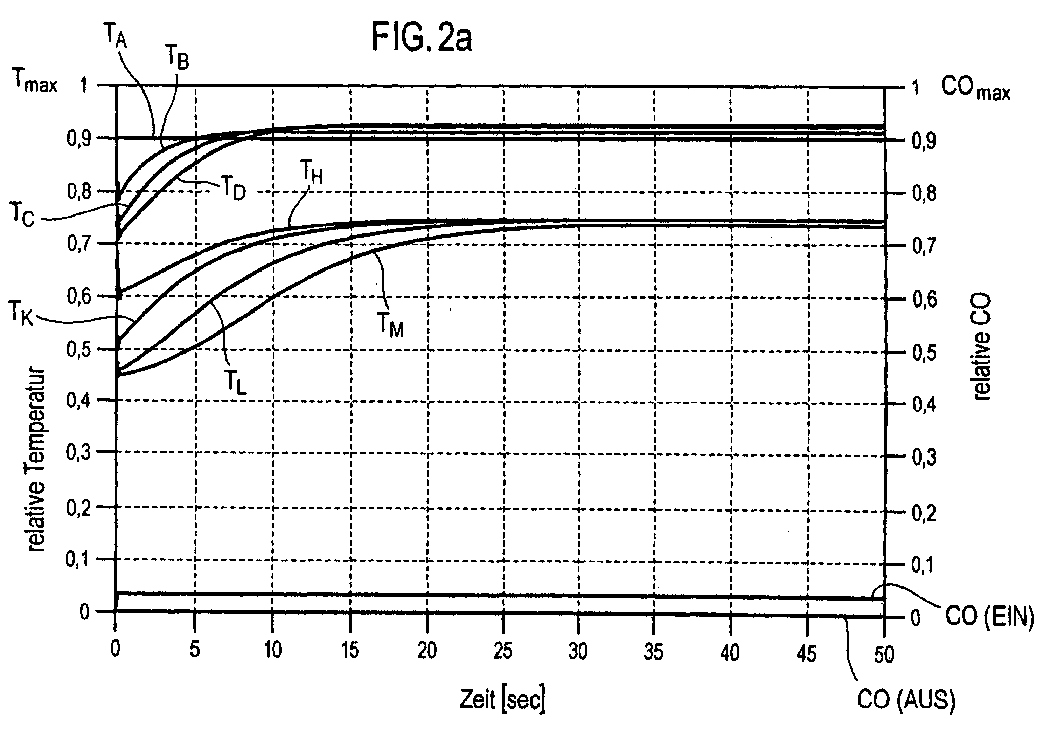

- Figur 2a: mit relativer Temperaturverteilung bei einer Geschwindigkeit von 200 km/h und

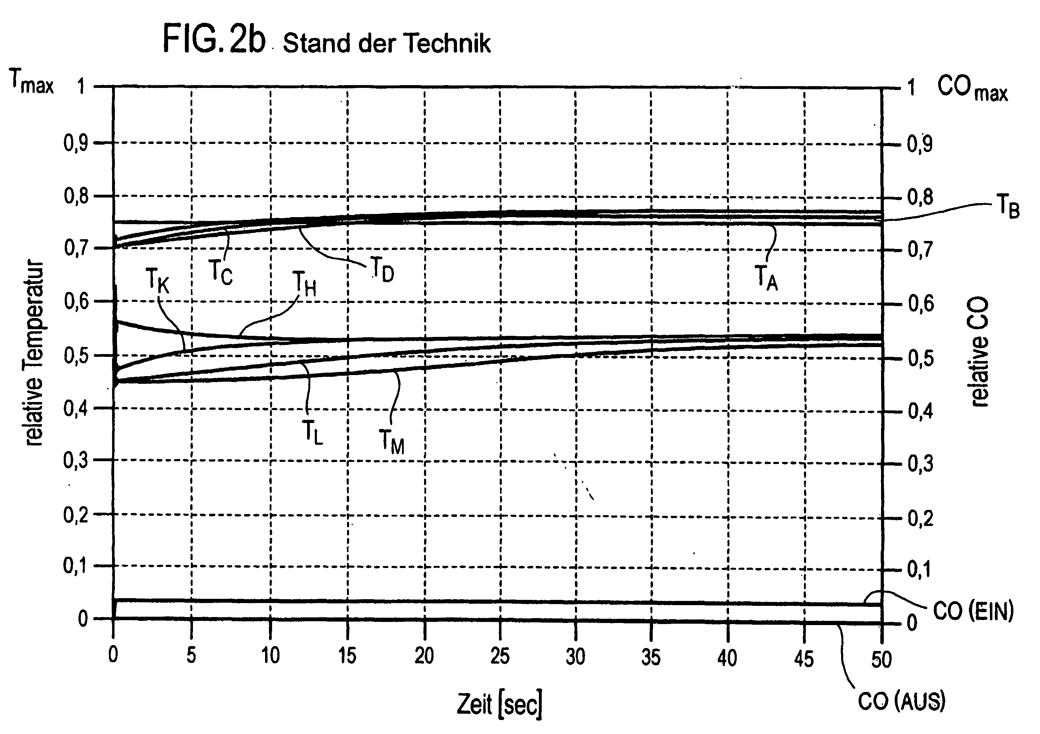

- Figur 2b: mit relativer Temperaturverteilung bei Tempo 120 km/h darstellt;

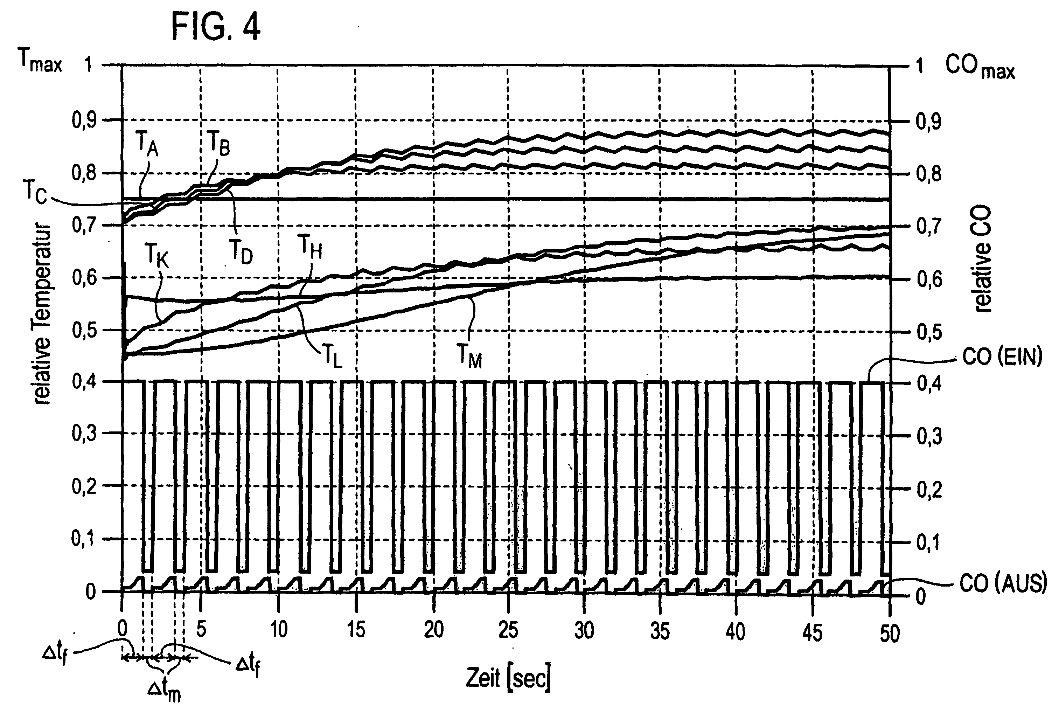

- Figur 3: Darstellung zur Erläuterung des Funktionsprinzips der λ-Variation zur Aufheizung mit Darstellung der λ-Variation und der hierdurch bedingten Veränderungen des O₂-Speicherinhalts des stromauf- und stromabwärts angeordneten Katalysators;
- Figur 4: Diagramm zur Darstellung der relativen Temperaturverteilung bei erfindungsgemäßer λ-Variation zur Aufheizung bei einer Geschwindigkeit von 120 km/h;

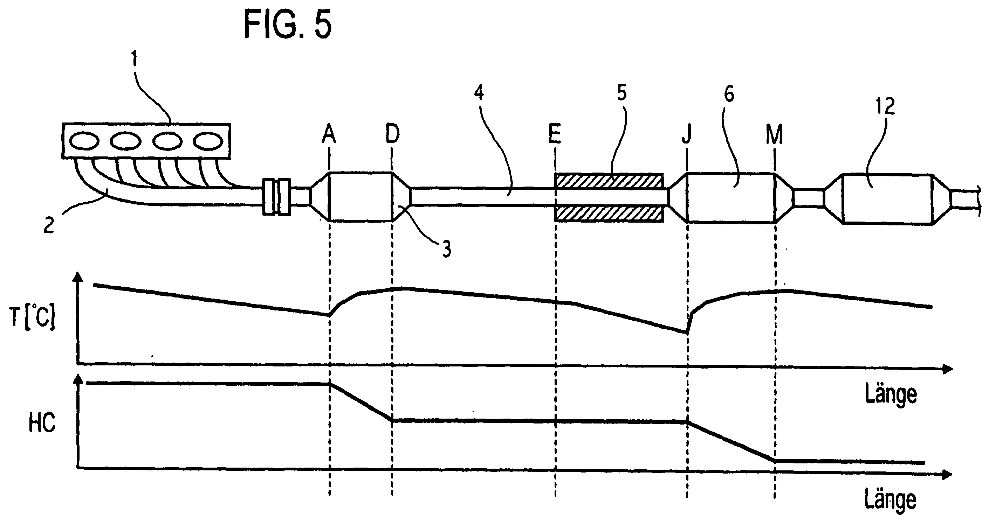

- Figur 5: qualitative Darstellung der relativen Temperatur und der messbaren HC-Mengen in der Abgasanlage über der Länge der Abgasanlage im aufgeheizten Zustand;

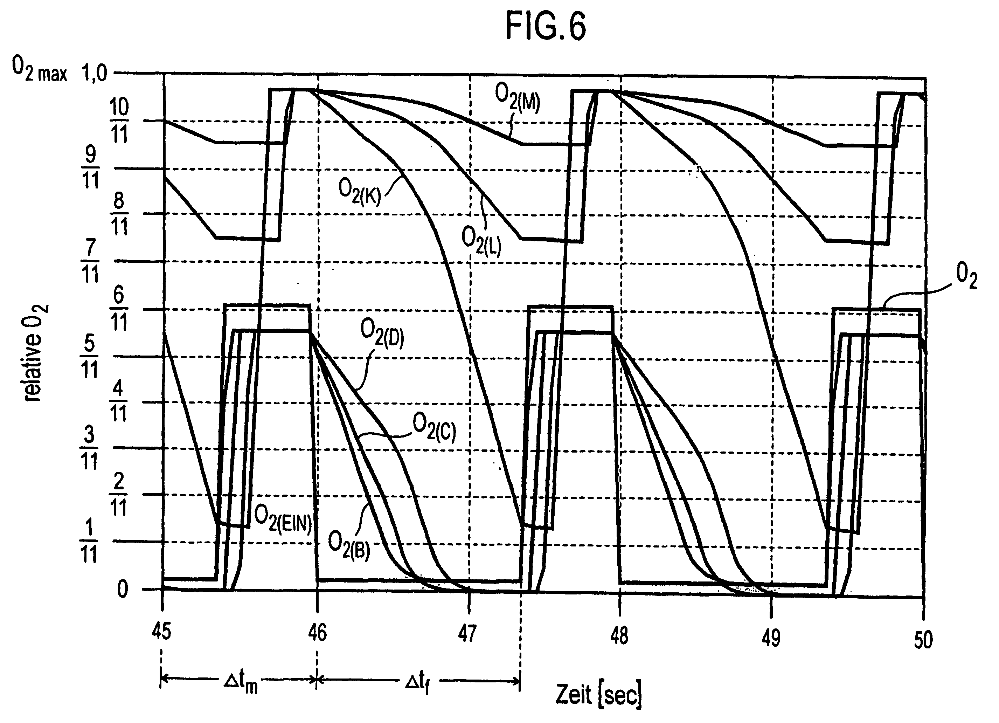

- Figur 6: Darstellung der Veränderung des relativen O₂-Speicherinhalts des stromauf- und stromabwärts angeordneten Katalysators über der Zeit; und

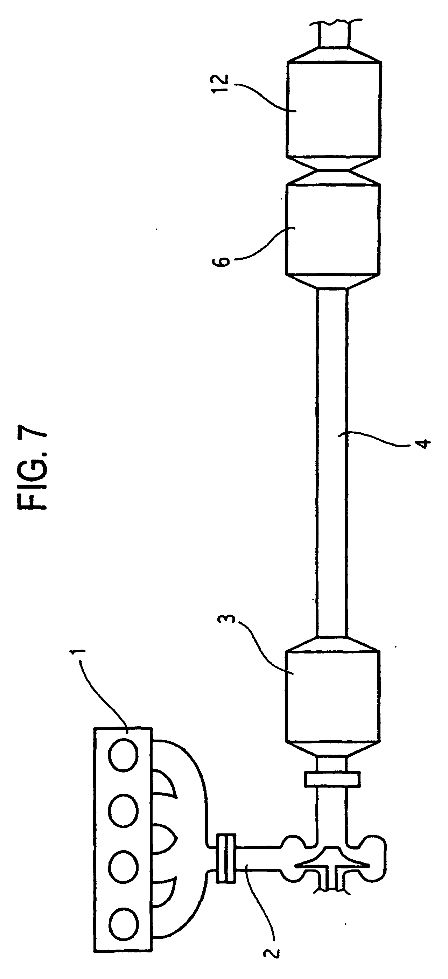

- Figur 7: den schematischen Aufbau einer alternativen Ausführung einer Abgasanlage eines direkteinspritzenden Turbodieselmotors.

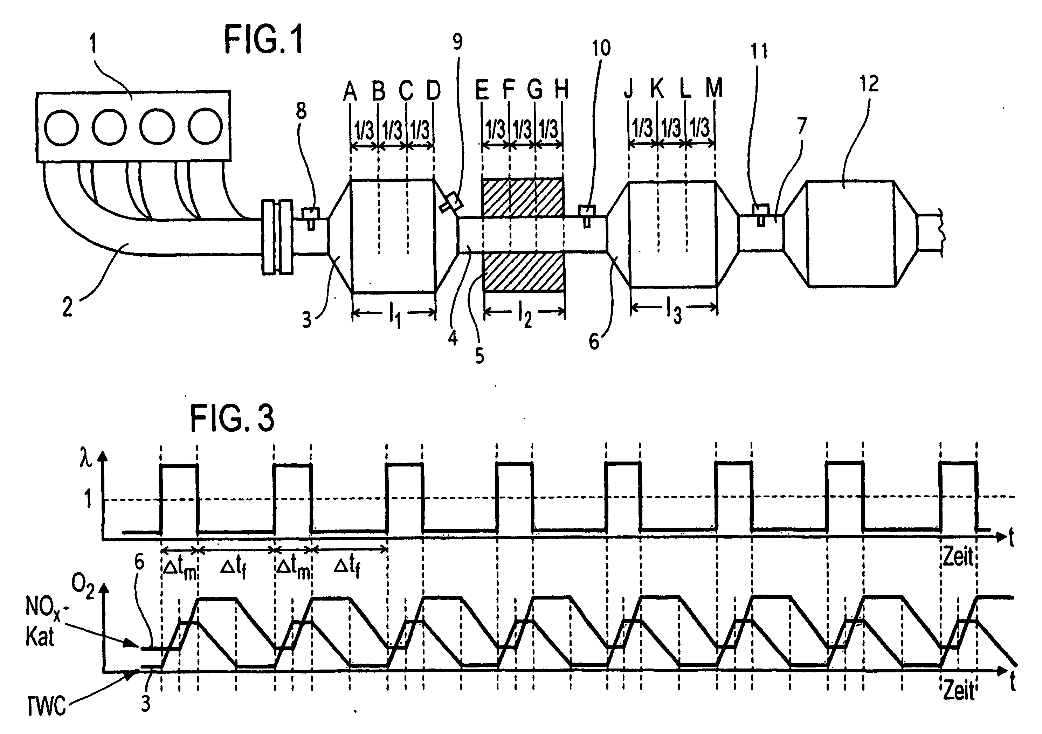

In Figur 1 ist eine Abgasanlage am Beispiel eines direkteinspritzenden Verbrennungsmotors nach Diesel-Bauart dargestellt. Aus dem Verbrennungsmotor 1 werden in bekannter Weise über Abgasrohre 2, einen Oxidationskatalysator 3, ein Abgasrohr 4, einen NOₓ-Adsorber 6 bzw. einen Dreiwegekatalysator und einen Rußfilter 12 und ein Abgasrohr 7 die Abgase abgeleitet. Dem Oxidationskatalysator 3 vorgeordnet ist eine Breitwand-Lambdasonde 8 und nachgeordnet eine Lambdasonde 9 bekannter Art, durch welche Abweichungen des λ-Werts der Abgase vor und hinter dem Oxidationskatalysator 3 vom stöchiometrischen Wert λ = 1 erfasst werden. Ebenso ist in bekannter Weise dem NOₓ-Adsorber 6 nachgeordnet eine Lambdasonde 11 angeordnet, welche Abweichungen des λ-Werts vom stöchiometrischen Wert λ = 1 hinter dem NOₓ-Adsorber 6 erfasst. In bekannter Weise ist das Abgasrohr 4 zwischen dem Oxidationskatalysator 3 und dem NOₓ-Adsorber 6 und optional durch einen Abgaskühler 5 bekannter Art geführt und zur Erfassung der Eingangstemperatur des Abgases in den NOₓ-Adsorber 6 dem NOₓ-Adsorber 6 vorgelagert ein Temperatursensor 10 angeordnet. Der Oxidationskatalysator 3 ist in bekannter Weise mit einer oberen Temperaturgrenze von 950°C, der NOₓ-Adsorber 6 mit einer oberen Temperaturgrenze von 750°C ausgelegt. Der Arbeitsbereich des NOₓ-Adsorbers 6 liegt in bekannter Weise zwischen 250°C und 450°C.

Zur Erläuterung der Temperaturveränderungen wurde in Figur 1 der Oxidationskatalysator 3 in seiner Länge I₁ in drei gleich lange Abschnitte aufgeteilt. Die Position zu Beginn des Katalysators ist mit A, die Position nach einem Drittel der Länge I₁ mit B, die Position nach zwei Dritteln I₁ mit C und die Position am Ende von I₁ mit D bezeichnet. Ebenso ist der Abgaskühler 5 seiner Länge I₂ nach in drei gleich lange Abschnitte unterteilt, wobei E den Eingang des Abgaskühlers 5, F die Position nach einem Drittel I₂, G die Position nach zwei Dritteln I₂ und H die Position am Ende des Abgaskühlers 5 angibt. In gleicher Weise wurde der NOₓ-Adsorber 6 seiner Länge I₃ nach in drei gleich lange Abschnitte unterteilt, wobei J die Position zu Beginn des NOₓ-Adsorber 6, K die Position nach einem Drittel I₃, L die Position nach zwei Dritteln I₃ und M die Position am Ausgang des NOₓ-Adsorbers 6 angibt.

Der in den Figuren 2a, 2b, 4 und 6 dargestellte zeitliche Temperaturverlauf kann beispielsweise mit Hilfe des Brennwerteintrages ermittelt werden. Zur genaueren Bestimmung des Brennwerteintrages in dem NOₓ-Adsorber 6 wird das λ-Signal vor dem Oxidationskatalysator 3 und nach dem NOₓ-Adsorber 6 herangezogen. Der Brennwerteintrag in den NOₓ-Adsorber 6 ergibt sich aus dem Breitbandsignal der Lambdasonde 8 vor dem Oxidationskatalysator 3 und der Zeit, die zwischen dem Fett-Durchbruch der Lambdasonde 9 nach dem Oxidationskatalysator 3 und dem Fett-Durchbruch der Lambdasonde 11 nach dem NOₓ-Adsorber 6 liegt. Zur Vermeidung eines Fett-Durchbruchs wird eine maximale Zeit bis kurz vor dem Durchbruch für die Fett-Phase in einem Kennfeld über der Abgasmasse abgelegt. Mit dem Brennwerteintrag in den NOₓ-Adsorber 6 und mit den mit dem Temperatursensor 10 gemessenen Temperaturen vor dem NOₓ-Adsorber 6 wird die Temperatur im NOₓ-Adsorber 6 berechnet.

Zur Diagnose kann die Zeit bis zum Fett-Durchbruch mit den im Kennfeld abgelegten Zeiten verglichen werden.

Die Figuren 2a und 2 b zeigen den zeitlichen Temperaturverlauf TA, TB, TC, TD, TH, TK, TL, TM in den Positionen A, B, C, D, H, K, L, M sowie beispielhaft für die Abgasschadstoffe CO, HC und NOₓ den zeitlichen Verlauf der gemessenen CO-Werte am Eingang des Oxidationskatalysators 3, gemessen durch die Breitband-Lambdasonde 8, und den zeitlichen Verlauf der gemessenen CO-Werte im Anschluss an den NOₓ-Adsorber 6, gemessen durch die Lambdasonde 11, beim Versuch, ohne weitere Maßnahmen eine Temperaturerhöhung zu erzielen, um eine Desulfatisierung einzuleiten.

In Figur 2a kann bei Volllast bei einer Geschwindigkeit von 200 km/h erkannt werden, dass die vom Verbrennungsmotor 1 in den motornahen Oxidationskatalysator 3 eingeleitete Verbrennungsenergie Temperaturen erzeugt, die ausgehend von der Eingangstemperatur TA im Oxidationskatalysator 3 in der Ebene A mit konstant 0,9•Tₘₐₓ in den in Abgasförderrichtung nachgeordneten Positionen zu Beginn dieser reinen Motoraufheizung noch unterhalb dieser Temperatur liegen, wobei bereits nach kurzer Zeit im Oxidationskatalysator 3 die Temperaturen TB, TC und TD aufgrund der exothermen Reaktionen im Oxidationskatalysator 3 auf Werte zwischen 0,9•Tₘₐₓ und 0,95•Tₘₐₓ ansteigen. Etwas zeitverzögert werden auch die Temperaturen TK in der Position K, TL in der Position L und TM in der Position M des NOₓ-Adsorbers 6 aus dem optimalen Arbeitsbereich des NOₓ-Adsorbers 6 von 0,25 T•ₘₐₓ bis 0,45•Tₘₐₓ angehoben und erreichen Werte bis zu 0,75•Tₘₐₓ, so dass eine Einleitung der Rußverbrennung im direkten oberen Temperaturgrenzbereich bei diesem Volllastfall möglich ist.

Figur 2b zeigt die gleiche Abgasanlage bei dem gleichen Motor, jedoch im Teillastbetrieb bei einer Geschwindigkeit von 120 km/h.

Aus den Diagrammen kann erkannt werden, dass die Temperaturen TA, TB, TC, TD in den Ebenen A, B, C, D des Oxidationskatalysators 3 aufgrund der deutlich geringeren Eingangstemperatur TA nur noch Werte bis zu 0,75•Tₘₐₓ annehmen und die Temperaturen TK, TL, TM in den Positionen K, L, M des NOₓ-Adsorbers 6 sich auf Temperaturwerte unter 0,55•Tₘₐₓ einstellen. Eine Einleitung der Rußverbrennung im Teillastbereich findet somit nicht statt.

In den Figuren 3 bis 6 ist die erfindungsgemäße Aufheizung auf eine Temperatur zur Einleitung der Rußverbrennung einer in Figur 1 gezeigten Abgasanlage schematisch dargestellt. Zum Aufheizen des NOₓ-Adsorbers 6 und des Rußfilters 12 erfolgt eine kurze zyklische λ-Variation, wie sie in Figur 3 beispielhaft dargestellt ist Hierzu wird nach festgelegten Fahrzyklen, beispielsweise 5000 oder 10000 km, nach welchen eine Einleitung der Rußverbrennung gewünscht ist, zur Aufheizung der Motor zyklisch fett bzw. mager betrieben. Die Zeitspanne zur Aufheizung soll möglichst minimiert werden. Beispielsweise beträgt sie zwischen 20 Sekunden und 2 Minuten je nach Last- und Anfangstemperatur des Rußfilters 12. Während der Zeitspanne der Fett-Phase Δt_{f} wird der Motor mit λ betrieben, für welches gilt: 0,95 ≥ λ ≥ 0,9 beispielsweise 0,92. In der kurzen Zeitspanne Δtₘ des Mager-Betriebs mit 3 ≥ λ ≥1,1 wird möglichst viel O₂ in den Oxidationskatalysator 3 und in den NOₓ-Adsorber 6 eingetragen. Die Zeiten, in denen der Motor fett bzw. mager zu betreiben ist, sind in einem Kennfeld über der Gaseintrittstemperatur, der Motorluftmasse und dem λ-Werten für den Fett- bzw. Mager-Betrieb abgelegt.

Wie in Figur 3 dargestellt ist, erfolgt entsprechend der λ-Variation ein zyklisches Be- und Entladen des Sauerstoffspeichers im Oxidationskatalysator 3 sowie im NOₓ-Adsorber 6, wobei die Beladung des Oxidationskatalysators 3 mit Beginn der Mager-Phase (λ > 1) beginnt und die Entladung des Oxidationskatalysators 3 mit Beginn der Fett-Phase beginnt. Das Be- und Entladen des NOₓ-Adsorbers 6 ist gegenüber dem Zyklus des Oxidationskatalysators 3 phasenverschoben.

Figur 4 zeigt den Temperaturverlauf im Oxidationskatalysator 3 und im NOₓ-Adsorber 6 sowie die CO-Emissionen vor (CO EIN) und nach (CO AUS) der Abgasanlage bei Teillastbetrieb mit einer Geschwindigkeit von 120 km/h. Der Fett-Mager-Zyklus ist so gewählt, dass die Fett-Phase in diesem Beispiel Δt_{f} = 1,5 Sekunden und die Mager-Phase Δtₘ = 0,5 Sekunden beträgt. Wie für die Positionen B, C, D des Oxidationskatalysators 3 und für die Positionen K, L, M des NOₓ-Adsorbers 6 von Figur 1 in Figur 4 deutlich zu erkennen ist, steigen die diesen Positionen zuzuordnenden Temperaturen TB, TC, TD, TK, TL, TM in den Fett-Phasen an. Die exotherme Verbrennung im NOₓ-Adsorber 6 führt somit bereits nach kurzer Zeit zu einem Temperaturanstieg auch der Temperaturen TK, TL, TM in einen Bereich oberhalb von 0,65•Tₘₐₓ durch die exotherme Verbrennung unter Ausnutzung des gespeicherten Sauerstoffs im Oxidationskatalysator 3 und im NOₓ-Adsorber 6. In dem dargestellten Beispiel wird während der Aufheizung ca. 50 Prozent der exothermen Verbrennungsbestandteile an CO und HC vom Oxidationskatalysator 3 in den NOₓ-Adsorber 6 verlagert. In den Mager-Phasen werden die Sauerstoffspeicher des Oxidationskatalysators 3 und des NOₓ-Adsorber 6 mit O₂ gefüllt. Somit wird durch die λ-Variation gemäß Figur 3 bewirkt, dass ein Teil des Restbrennwertes im fetten Abgas nicht im Oxidationskatalysator 3, sondern im NOₓ-Adsorber 6 in Wärme umgesetzt wird.

Die zeitliche Änderung des gespeicherten Sauerstoffs während des Fett-Mager-Zyklus' im Oxidationskatalysator 3 und im NOₓ-Adsorber 6 ist für einen Ausschnitt zwischen den Zeiten t = 45 Sekunden und t = 50 Sekunden aus Figur 4 in Figur 6 vergrößert dargestellt. In den Mager-Phasen, zum Beispiel zwischen den Zeiten t = 45,3 bis t = 46,0 Sekunden, werden die Sauerstoffspeicher des Oxidationskatalysators 3 und des NOₓ-Adsorbers 6 aufgeladen, wobei ausgehend von der Position B über die Position C und die Position D des Oxidationskatalysators 3 über die Positionen K, L, M des NOₓ-Adsorbers 6 von Figur 1 zeitverzögert die Aufladung erfolgt. In den Fett-Phasen, zum Beispiel zwischen den Zeiten t = 45,3 und t = 46,0 Sekunden, werden die Sauerstoffspeicher in der gleichen Reihenfolge wieder entleert. Es sind Fälle denkbar, in denen eine völlige Entleerung des Sauerstoffspeichers des NOₓ-Adsorbers 6 zu hohen Endrohremissionen führen und gleichzeitig auch der hintere Teil des NOₓ-Adsorbers 6 überhitzt werden könnte. Der Sauerstoffspeicher des NOₓ-Adsorbers 6 wird deshalb - soweit diese Gefahr besteht - nicht vollständig entleert, sondern beispielsweise lediglich zu 30 Prozent.

Wie in Figur 4 zu erkennen ist, wird der Oxidationskatalysator 3 bei diesem Lastfall auf Temperaturen zwischen ca. 0,75•Tₘₐₓ und 0,89•Tₘₐₓ erhitzt und der NOₓ-Adsorber 6 auf Temperaturen zwischen 0,65•Tₘₐₓ und 0,7•Tₘₐₓ, so dass eine Einleitung der Rußverbrennung sicher durchgeführt werden kann. Die Rußverbrennung erfolgt in bekannter, nicht näher dargestellter Weise. Vom NOₓ-Adsorber 6 wird über das derartig erhitzte Abgas auch der nachfolgend angeordnete Rußfilter 12 derart erhitzt, dass auch der darin gesammelte Ruß verbrannt wird.

Wie in Figur 4 zu erkennen ist, steigt der CO-Gehalt am Ende einer Fett-Phase hinter dem NOₓ-Adsorber 6 geringfügig an. Dieses Zeichen des Fett-Durchbruchs durch den NOₓ-Adsorber 6 wird von der Lambdasonde 11 hinter dem NOₓ-Adsorber 6 festgestellt und bei Erreichen des vorgegebenen Schwellenwertes wird die Mager-Phase direkt eingeleitet. Ebenso wird ein Durchbrechen der Mager-Phase durch den NOₓ-Adsorber 6 von der Lambdasonde 9 erfasst. Bei Erreichen eines vorgegeben Schwellenwertes wird direkt die Fett-Phase eingeleitet.

Figur 5 zeigt den qualitativen Temperaturverlauf und Abgasschadstoffverlauf am Beispiel von HC über der Länge des Abgassystems bei Erreichen der Desulfatisierungstemperatur im NOₓ-Adsorber 6.

Obwohl in den oben genannten Ausführungen die Lambdasonde 11 zwischen NOₓ-Adsorber 6 und dem Rußfilter 12 angeordnet dargestellt ist, ist es ebenso möglich, die Lambdasonde 11 dem Rußfilter 12 nachgeordnet auszubilden. Ebenso ist es denkbar, die Lambdasonde 9 und/oder die Breitwand-Lambdasonde 8 den individuellen Anforderungen entsprechend an anderer geeigneter Stelle zu platzieren und gegebenenfalls durch andere geeignete Sensoren zu ersetzen oder bei ausreichender sonstiger Information über den Abgaszustand fallen zu lassen.

Figur 7 zeigt ein Ausführungsbeispiel, bei dem der Rußfilter 12 unmittelbar an den NOₓ-Adsorber 6 angrenzt.

In einer weiteren, nicht dargestellten Ausführung ist der Rußfilter 12 und der NOₓ-Adsorber 6 als ein gemeinsames Bauteil ausgebildet.

Obwohl in den oben genannten Ausführungen die Wärmeerzeugung zur Aufheizung des Rußfilters 12 über einen zwischen Oxidationskatalysator 3 und Rußfilter 12 angeordneten NOₓ-Adsorber 6 erfolgt, ist es ebenso möglich, anstelle des NOₓ-Adsorbers 6 zwischen Oxidationskatalysator 3 und Rußfilter 12 einen Drei-Wege-Katalysator bekannter Art anzuordnen, in dem über das oben beschriebene Verfahren der Variation des λ-Werts eine exotherme Reaktion erzeugt wird, die den Drei-Wege-Katalysator und den nachfolgend angeordneten Rußfilter 12 so weit aufheizt, dass der darin angesammelte Ruß verbrennt.

Soweit erforderlich, kann die λ-Variation auch zur Aufheizung des NOₓ-Adsorbers 6 auf Desulfatisierungstemperatur zwecks Einleitung einer Entschwefelung eingesetzt werden.

Auch wenn sich die dargestellten Beispiele auf die Abgasanlage eines Dieselmotors beziehen, ist das erfindungsgemäße Verfahren ebenso bei anderen Motoren mit ähnlicher Abgasproblematik, bei denen die Forderung zur Aufheizung zwecks Regeneration eines Rußfilters einsetzbar,

### BEZUGSZEICHENLISTE

- 1: Verbrennungsmotor
- 2: Abgasrohr
- 3: Oxidationskatalysator
- 4: Abgasrohr
- 5: Abgaskühler
- 6: Noₓ-Adsorber
- 7: Abgasrohr
- 8: Breitband-Lambdasonde
- 9: Lambdasonde
- 10: Temperatursensor
- 11: Kombinierter NOₓ- und O₂-Sensor
- 12: Rußfilter

## Patentansprüche

1. Verfahren zum Aufheizen eines Rußfilters bei einem Abgasanlagensystem eines Verbrennungsmotors, insbesondere eines Dieselmotors mit
- mehreren in Abgasströmungsrichtung hintereinander angeordneten Katalysatoren und
- einem diesen in Strömungsrichtung nachgeordneten Rußfilter zum Speichern des Rußes,
wobei der dem Rußfilter unmittelbar vorgeordnete Katalysator soweit aufgeheizt wird, dass die aus diesem Katalysator in den Rußfilter eingeleitete Wärmemenge den Rußfilter soweit aufheizt, dass die Verbrennung des Rußes eingeleitet wird,
**dadurch gekennzeichnet, dass**
der dem Rußfilter (12) in Strömungsrichtung unmittelbar vorgeordnete Katalysator (6) aufgeheizt wird, indem die exotherme Reaktion aus einem weiteren in Strömungsrichtung vorgeordneten Katalysator (3) in den nachgeordneten Katalysator (6) verlagert wird, wobei die Verlagerung der exothermen Reaktion durch eine λ-Regelung mit alternierendem Fett-Mager-Betriebszyklus des Verbrennungsmotors (1) erfolgt, bei welcher der Fett-Betrieb mit λ < 1 jeweils länger aufrechterhalten wird als der im Sauerstoffspeicher des stromaufwärts angeordneten Katalysators (3) gespeicherte Sauerstoff (O₂) die Schadstoffe Kohlenwasserstoff (HC) und Kohlenmonoxid (CO) umsetzen kann, so dass die Umsetzung zumindest teilweise durch den im Sauerstoffspeicher des stromabwärts angeordneten Katalysators (6) gespeicherten Sauerstoff (O₂) erfolgt.

2. Verfahren nach Anspruch, **dadurch gekennzeichnet, dass** im Mager-Betrieb mit λ > 1 die Sauerstoffspeicher der beiden Katalysatoren (3, 6) wieder gefüllt werden.

3. Verfahren nach Anspruch 1 oder 2, **dadurch gekennzeichnet, dass** λ zum Aufheizen so geregelt wird, dass für λ im zyklischen Fett-Betrieb während des Aufheizens gilt: 0,95 ≥ λ ≥ 0,9.

4. Verfahren nach einem der Ansprüche 1 bis 3, **dadurch gekennzeichnet, dass** die Regelung des Fett-Mager-Betriebs-Zyklus mittels Sauerstoffsensoren - insbesondere mittels λ-Sonden - erfolgt, die in einer dem stromabwärts angeordneten Katalysator (6) nachgeordneten Position Abgas überprüfen.

5. Verfahren nach Anspruch 4, **dadurch gekennzeichnet, dass** im Fett-Betrieb λ hinter dem stromabwärts angeordneten Katalysator (6) gemessen wird und bei Unterschreiten eines vorgegebenen oberen Schwellwertes für λ vom Fett-Betrieb auf Mager-Betrieb umgestellt wird.

6. Verfahren nach Anspruch 4 oder 5, **dadurch gekennzeichnet, dass** im Mager-Betrieb λ hinter dem stromabwärts angeordneten Katalysator (6) gemessen wird und beim Überschreiten eines vorgegebenen unteren Schwellwertes für λ vom Mager-Betrieb auf Fett-Betrieb umgestellt wird.

7. Verfahren nach einem oder mehreren der Ansprüche 1 bis 6, **dadurch gekennzeichnet, dass** der vorgeordnete Katalysator (3) ein Oxidationskatalysator und der nachgeordnete Katalysator (6) ein NOₓ-Adsorber ist, wobei der NOₓ-Adsorber (6) durch die Verlagerung der exothermen Reaktion aus dem Oxidationskatalysator (3) in den NOₓ-Adsorber (6) - insbesondere auf Desulfatisierungstemperatur - aufgeheizt wird.

8. Verfahren nach einem oder mehreren der Ansprüche 1 bis 6, **dadurch gekennzeichnet, dass** der vorgeordnete Katalysator (3) ein Oxidationskatalysator und der nachgeordnete Katalysator ein Drei-Wege-Katalysator mit Sauerstoffspeicher ist, wobei der Drei-Wege-Katalysator (6) durch die Verlagerung der exothermen Reaktion aus dem ersten Oxidationskatalysator (3) in den Drei-Wege-Katalysator aufgeheizt wird.

## Claims

1. Method for heating a soot filter in an exhaust system of an internal combustion engine, in particular a diesel engine, comprising a plurality of catalysers arranged sequentially in the exhaust flow direction and a soot filter arranged downstream of said catalysers for gathering soot, whereby the catalyser arranged immediately before the soot filter is heated to an extent such that the quantity of heat conducted from said catalyser into the soot filter heats the soot filter to an extent such that combustion of the soot is initiated, **characterised in that** the catalyser (6) arranged immediately before the soot filter (12) in the direction of flow is heated **in that** the exothermic reaction is displaced from a further catalyser (3) arranged upstream in the direction of flow to the downstream catalyser (6), whereby the displacement of the exothermic reaction takes place by means of λ-control with alternating rich/lean burn operating cycles of the internal combustion engine (1), whereby the rich burn operation with λ < 1 is sustained for longer than the oxygen (O₂) stored in the oxygen store of the catalyser (3) arranged upstream can convert the hydrocarbon (HC) and carbon monoxide (CO) pollutants, so that the conversion takes place at least partially through the oxygen (O₂) stored in the oxygen store of the downstream catalyser (6).

2. Method according to claim 1, **characterised in that** during lean burn operation with λ > 1, the oxygen stores of the two catalysers (3, 6) are filled up again.

3. Method according to claim 1 or 2, **characterised in that** λ for heating up is controlled such that for λ in the cyclical rich burn operation during heating up, the following applies: 0.95 ≥ λ ≥ 0.9.

4. Method according to one of the claims 1 to 3, **characterised in that** control of the lean/rich burn operating cycle is achieved by means of oxygen sensors - in particularly with λ-probes - which test the exhaust in a position following the downstream catalyser (6).

5. Method according to claim 4, **characterised in that** in rich burn operation, λ is measured after the catalyser (6) arranged downstream and, on undershooting a predetermined upper threshold value for λ, switching over from rich burn operation to lean burn operation is undertaken.

6. Method according to claim 4 or 5, **characterised in that** in lean burn operation, λ is measured after the catalyser (6) arranged downstream and on exceeding a predetermined lower threshold value for λ, switching over from lean burn to rich burn operation is undertaken.

7. Method according to one or more of the claims 1 to 6, **characterised in that** the upstream catalyser (3) is an oxidation catalyser and the downstream catalyser (6) is an NOₓ adsorber, whereby the NOₓ adsorber (6) is heated by displacement of the exothermic reaction from the oxidation catalyser (3) to the NOₓ adsorber (6), in particular to the desulphation temperature.

8. Method according to one or more of the claims 1 to 6, **characterised in that** the upstream catalyser (3) is an oxidation catalyser and the downstream catalyser is a three-way catalyser with oxygen store, whereby the three-way catalyser (6) is heated by displacement of the exothermic reaction from the first oxidation catalyser (3) to the three-way catalyser.

## Revendications

1. Procédé de chauffage d'un filtre à suie dans un système de gaz d'échappement d'un moteur à combustion interne, en particulier un moteur diesel, comprenant
- une pluralité de catalyseurs, disposés les uns derrière les autres dans la direction d'écoulement des gaz d'échappement, et
- un filtre à suie, disposé en aval de ceux-ci dans la direction d'écoulement, afin de stocker la suie,
le catalyseur, disposé directement en amont du filtre à suie, étant chauffé à un degré faisant que la quantité de chaleur introduite de ce catalyseur dans le filtre à suie ait comme effet de chauffer le filtre à suie à un degré faisant que la combustion de la suie soit induite,
**caractérisé en ce que**
le catalyseur (6), disposé directement en amont du filtre à suie (12) dans la direction d'écoulement, est chauffé par le fait que la réaction exothermique est déplacée, d'un autre catalyseur (3), disposé en amont dans la direction d'écoulement, au catalyseur (6), disposé en aval, sachant que le déplacement de la réaction exothermique s'effectue par une régulation de l'indice λ avec une alternance de cycles de fonctionnement en régime riche/pauvre du moteur à combustion (1), régulation pour laquelle le fonctionnement en régime riche avec λ<1 est chaque fois conservé plus longtemps que la durée pour laquelle l'oxygène (O₂), stocké dans l'accumulateur d'oxygène du catalyseur (3) disposé en amont, puisse convertir les substances nocives que sont l'hydrocarbure (HC) et le monoxyde de carbone (CO), de manière que la conversion se fasse au moins partiellement du fait de l'oxygène (O₂) stocké dans l'accumulateur d'oxygène du catalyseur (6) disposé en aval.

2. Procédé selon la revendication 1, **caractérisé en ce que**, en fonctionnement en régime maigre avec λ>1, l'accumulateur d'oxygène des deux catalyseurs (3,6) est de nouveau chargé.

3. Procédé selon la revendication 1 ou 2, **caractérisé en ce que**, pour effectuer le chauffage, on règle l'indice λ, de manière que, lors d'un fonctionnement cyclique en régime riche, pendant le chauffage, on ait pour λ l'inégalité : 0,95 ≥ λ ≥ 0,9.

4. Procédé selon l'une des revendications 1 à 3, **caractérisé en ce que** la régulation du cycle de fonctionnement en régime riche-maigre s'effectue au moyen de capteurs d'oxygène - en particulier au moyen de sondes λ - qui contrôlent les gaz d'échappement en une position disposée en aval du catalyseur (6) disposé en aval.

5. Procédé selon la revendication 4, **caractérisé en ce que**, en fonctionnement en régime riche, λ, derrière le catalyseur (6) disposé en aval, est mesuré et, en cas de descente en-dessous d'une valeur de seuil supérieure prédéterminée de λ, on passe du fonctionnement en régime au fonctionnement en régime pauvre.

6. Procédé selon l'une des revendications 4 ou 5, **caractérisé en ce que**, en fonctionnement en régime pauvre, on mesure λ derrière le catalyseur (6) disposé en aval et, en cas de dépassement d'une valeur seuil inférieure prédéterminée, pour λ, on commute, du fonctionnement en régime pauvre en fonctionnement en régime riche.

7. Procédé selon l'une ou plusieurs des revendications 1 à 6, **caractérisé en ce que** le catalyseur (3) amont est un catalyseur à oxydation et le catalyseur (6) aval est un adsorbeur de NOₓ₋(6), l'adsorbeur de NOₓ₋(6) étant chauffé, en particulier à la température de dé sulfatation, par le déplacement de la réaction exothermique du catalyseur à oxydation (3) à l'adsorbeur de NOₓ₋(6).

8. Procédé selon l'une ou plusieurs des revendications 1 à 6, **caractérisé en ce que** le catalyseur (3) disposé en amont est un catalyseur à oxydation et le catalyseur disposé en aval est un catalyseur à trois voies avec un accumulateur d'oxygène, le catalyseur à trois voies (6) étant chauffé par le déplacement de la réaction exothermique, du premier catalyseur à oxydation (3) au catalyseur à trois voies.
